(19) Europäisches Patentamt

**European Patent Office**

**Office européen des brevets**

(11) Numéro de publication: **0 007 272**
**B2**

(12) **NOUVEAU FASCICULE DE BREVET EUROPEEN**

(45) Date de publication du nouveau fascicule du brevet:
**30.03.88**

(21) Numéro de dépôt: **79400454.9**

(22) Date de dépôt: **03.07.79**

(51) Int. Cl.⁴: **G 01 T 1/142**

(54) **Dispositif de lecture automatique de la dose d'irradiation d'un dosimètre portatif à chambre d'ionisation.**

(30) Priorité: **12.07.78 FR 7820806**

(43) Date de publication de la demande:
**23.01.80 Bulletin 80/2**

(45) Mention de la délivrance du brevet:
**28.04.82 Bulletin 82/17**

(45) Mention de la décision concernant l'opposition:
**30.03.88 Bulletin 88/13**

(84) Etats contractants désignés:
**BE CH DE GB IT**

(56) Documents cités:
**Bon de livraison no. 51414 daté du 12.02.77 concernant la livraison par la firme FRIESEKE & HOEPFNER GmbH sise à Erlangen-Bruck (R.F.A.) de trois dispositifs du type "AUTORAD FHT 3900" à la société KRAFTWERK UNION AG, sise à Francfort sur le Main (R.F.A.) Feuille de dessin no. S42428/0620 représentant le schéma électrique d'un amplificateur de charge et portant la date d'exécution du 12.05.76 Article intitulé: "MESSTECHNIK UND DATENVERARBEITUNG EINES AUSWERTEGERÄTES FÜR STABDOSIMETER", auteurs: A. HOEGL et E. PFEIFFER, publié dans la revue "ATOMWIRTSCHAFT-ATOMTECHNIK, vol. XXII, no. 10, octobre 1977, pages 512-515**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Hulot, Michel, 1Dis, rue Pierre Curie, F-92120 Montrouge (FR)**
Inventeur: **Prigent, Raymond, La Ronce, F-91460 Marcoussis (FR)**

(74) Mandataire: **Mongrédien, André et al, c/o BREVATOME 25, rue de Ponthieu, F-75008 Paris (FR)**

## Description

La présente invention concerne un dispositif de lecture automatique de la bose d'irradiation d'un dosimètre portatif à chambre d'ionisation. Ce dispositif s'applique notamment à la mesure des doses de radiation supportées par le personnel dans les installations ou laboratoires nucléaires. Dans les installations nucléaires, certains travaux de réparation ou d'entretien sont effectués sous irradiations, à des débits de doses qui peuvent être très élevés. Il en résulte qu'il est important de connaître avec précision, à la fin ou pendant chaque période de présence à un poste de travail, la dose reçue par le personnel concerné, ainsi que, par exemple, la dose comulée au cours d'un trimestre et d'une année, afin de s'assurer du respect de la réglementation en vigueur dans ce domaine particulier; un archivage s'étendant sur plusieurs années peut ainsi être réalisé. Le personnel est donc amené à porter des dosimètres permettant de connaître la dose de radiations absorbée au cours de certains travaux.

Il existe divers types de dosimètres portatifs. Parmi ces dosimètres, on distingue principalement:

– les dosimètres radiothermoluminescents ou radiophotoluminescents qui sont d'un emploi aisé mais qui nécessitent une technique de lecture assez complexe, relevant du domaine du laboratoire; – le dosimètre portatif, à lecture directe plus communément connu sous l'appellation de stylodosimètre. Ce dosimètre comprend généralement une chambre d'ionisation de faibles dimensions, dans laquelle est localisé un électroscope. Le champ électrique de collection de la chambre est obtenu en chargeant la capacité entre électrodes de l'électroscope et la capacité additionnelle qui définit le calibre de mesure du dosimètre, au moyen d'un chargeur extérieur. Le rayonnement provoque une décharge de cette capacité. La décharge est alors mesurée grâce à l'électroscope incorporé au stylodosimètre: la partie mobile de l'électroscope se déplace selon les lois de Coulomb d'attraction ou de répulsion des charges électriques. Le repérage du déplacement de la partie mobile de l'électroscope s'effectue au moyen d'un système optique constitué d'un microscope associé à une échelle graduée. Ce type de dosimètre est très sensible aux chocs; il en résulte des possibilités d'erreur de mesure des doses reçues. De plus, la plage de mesure est limitée, ainsi que le nombre des graduations de l'échelle, ce qui rend la lecture très délicate. Cette lecture est généralement confiée à un personnel spécialisé, à qui incombe également la remise à zero du stylodosimètre, c'est-à-dire sa recharge. Cette remise à zéro est malaisée. En pratique, la mesure de dose reçue se déduit par le calcul de la différence entre la position de l'index sur le microscope après irradiation, et la position initiale de cet index, inscrite sur un registre avant l'emploi du dosimètre;

– le dosimètre à lecture indirecte, plus couramment connu sous le nom de stylocondensateur. Le stylocondensateur est généralement formé d'un tube cylindrique constituant une électrode, et d'un fil axial constituant une autre électrode; le tube est rempli d'air à pression atmosphérique, et une différence de potentiel est appliquée entre les électrodes. Tant que l'air de la chambre n'est pas traversé par un rayonnement, la tension de l'électrode axiale reste constante. Le bruit de fond de la radioactivité ambiante des rayonnements cosmiques et électriques ne décharge la chambre qu'au bout de plusieurs semaines. Lorsque la chambre est traversée par un rayonnement relativement intense, la tension de l'électrode axiale diminue progressivement et la mesure de la tension résiduelle permet de connaître la dose totale reçue par l'individu qui porte le stylo. Ce stylocondensateur, bien que ne présentant pas les inconvénients du stylo-dosimètre précédent, nécessite un lecteur chargeur dont la manipulation incombe aussi à un personnel spécialisé.

Comme le stylodosimètre, ce stylo condensateur se prête mal à l'automatisation de l'exploitation.

Il est possible d'effectuer une lecture automatique des chambres d'ionisation à mesure optique, telles que le stylodosimètre. Cette lecture automatique de la charge du stylodosimètre consiste à repérer, par des moyens optiques, la déviation de l'électroscope du stylodosimètre; ces moyens optiques sont couplés à un enregistreur. Généralement, ces moyens optiques sont constitués par une caméra de télévision couplée à des moyens de traitement du signal vidéo. Ces moyens de traitement sont complexes et coûteux. De plus, le nombre de composants électroniques qui sont utilisés entraîne une diminution de la fiabilité du lecteur.

Un dispositif plus élaboré de mesure automatique de la dose d'irradiation d'un dosimètre portatif est par exemple celui qui est connu et commercialisé sous le nom de AUTORAD FHT 3900, commercialisé par la Société «FAG Kugelfischer Georg Schäfer & Co» et décrit dans la revue «Atomwirtschaft und Atomtechnik», pages 512 à 515, octobre 1977. Ce dispositif comprend notamment des moyens pour mesurer à chaque lecture la charge de la chambre d'ionisation du dosimètre; ces moyens comprennent un préamplificateur associé à des condensateurs d'intégration qui forment un diviseur capacitif avec le condensateur de la chambre d'ionisation, le transfert de la charge de la chambre au préamplificateur intégrateur qui effectue la mesure étant assuré par le diviseur capacitif de tension pour adapter la tension de la chambre aux caractéristiques d'entrée du préamplificateur. Dans ce dispositif, la dose d'irradiation est calculée, à chaque lecture, à partir d'une valeur fixe pour chaque dosimètre, et non à partir de la valeur de la charge mesurée lors d'une lecture précédente. Il en résulte que ce type de dispositif ne permet pas de mesurer des doses cumulées d'irradiation, puisqu'après chaque mesure la chambre d'ionisation présente une charge différente de celle qu'elle avait avant cette mesure.

La présente invention a pour but de remédier à ces inconvénients et notamment de réaliser un dispositif permettant la lecture automatique d'un dosimètre à lecture indirecte, du type stylocondensateur par exemple, sans qu'il soit nécessaire de disposer d'un personnel spécialisé, notamment pour la manipulation du lecteur chargeur, ce dispositif permettant notamment de mesurer des valeurs cumulées de doses d'irradiation, même si la charge de la chambre a été mesurée précédemment une ou plusieurs fois.

L'invention a pour objet un dispositif de lecture automatique de la dose d'irradiation d'un dosimètre portatif à chambre d'ionisation, comprenant des moyens pour mesurer, lors de chaque lecture, la valeur de la charge de la chambre d'ionisation, des moyens pour calculer à un instant quelconque la dose d'irradiation à partir d'une valeur mémorisée et de la valeur de la charge de la chambre à cet instant et des moyens pour polariser la chambre d'ionisation après une lecture, les moyens pour mesurer la valeur de la charge de la chambre d'ionisation comprenant un préamplificateur intégrateur adapté à la chambre d'ionisation en fonction du diviseur capacitif constitué par la capacité de la chambre et par un condensateur d'intégration du préamplificateur intégrateur, le transfert de la charge de la chambre d'ionisation au préamplificateur effectuant la mesure de la charge étant assuré par le diviseur capacitif de tension, de manière à adapter la tension de la chambre aux caractéristiques d'entrée du préamplificateur, caractérisé en ce que:

– le dispositif comprend des moyens, reliés aux moyens de mesure de la charge de la chambre d'ionisation par l'intermédiaire d'un convertisseur analogique-numérique pour mémoriser à chaque lecture la valeur mesurée de la charge de la chambre d'ionisation;
– les moyens pour calculer la dose D d'irradiation sont agencés de manière à calculer ladite dose à partir d'une des ces valeurs mesurées mémorisées; et
– les moyens pour polariser la chambre d'ionisation après une lecture sont agencés de manière à polariser ladite chambre avec une tension dont la valeur est égale à celle de la tension correspondant à la charge qui vient d'être mesurée.

Selon une caractéristique facultativ de l'invention, les moyens de polarisation comprennent un amplificateur dont le gain est l'inverse du gain du préamplificateur intégrateur, cet amplificateur étant connecté en sortie du préamplificateur.

Selon une autre caractéristique facultative, le dispositif comprend en outre des moyens automatiques de mise en place du dosimètre dans les moyens de mesure.

Selon une autre caractéristique facultative, l'amplificateur est connecté au préamplificateur par l'intermédiaire d'une mémoire analogique en vue de réduire les dérives de la mesure.

Selon une autre caractéristique facultative, le dispositif comprend en outre des moyens de simulation de doses d'irradiation.

D'autres caractéristiques facultatives et avantages de l'invention ressortiront encore de la description qui va suivre, donnée à titre purement illustratif, en référence aux dessins annexés, dans lesquels:

– la figure 1 représente un dosimètre portatif à chambre d'ionisation, de type stylocondensateur, pouvant être lu selon le procédé de l'invention;
– la figure 2 représente un dispositif conforme à l'invention, permettant la lecture automatique de la dose d'irradiation du stylocondensateur représenté sur la figure 1.

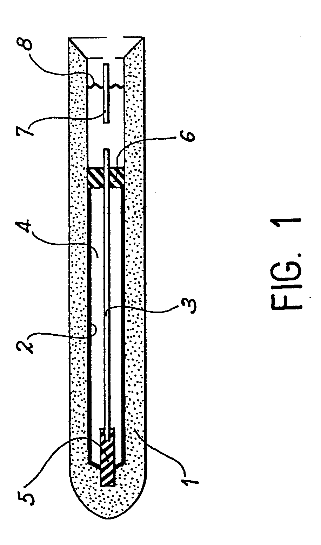

En référence à la figure 1, on a représenté un dosimètre portatif à chambre d'ionisation, de type stylocondensateur. Ce stylo comprend une première électrode formée d'un tube cylindrique 1, constitué par exemple de bakélite recouverte intérieurement d'une couche de graphite 2, et une deuxième électrode constituée par un fil axial 3. L'électrode axiale 3 est portée à un potentiel de 100 à 200 volts. La chambre d'ionisation est un volume d'air 4; lorsque cette chambre est traversée par un rayonnement relativement intense, la tension de l'électrode axiale diminue progressivement et la mesure de la tension résiduelle permet de connaître la charge électrique résiduelle du stylo et donc la dose totale de radiations reçue par l'individu qui porte le stylo. On a aussi représenté sur la figure des supports isolants 5 et 6, maintenant l'électrode axiale 3 à l'intérieur du cylindre 1. Un contact 7 supporté par une plaque isolante déformable 8, par exemple, permet d'assurer une liaison électrique entre l'électrode 3 et un chargeur extérieur, durant le chargement du stylo ou lors de la lecture du potentiel entre les électrodes, lorsque le stylo a été soumis au rayonnement. Il est bien évident que le contact 7 vient toucher l'extrémité de l'électrode axiale 3 grâce à la déformation de la plaque 8, mais que tout autre moyen permettant une liaison électrique avec cette électrode axiale pourrait être envisagé. Des moyens, non representés, permettent une mise en place automatique du dosimètre, dans le dispositif de lecture, qui seront décrits plus loin en détail.

Il est bien évident aussi que le cylindre 1 peut porter sur sa surface extérieur un code optique ou magnétique par exemple, permettant l'identification du stylo.

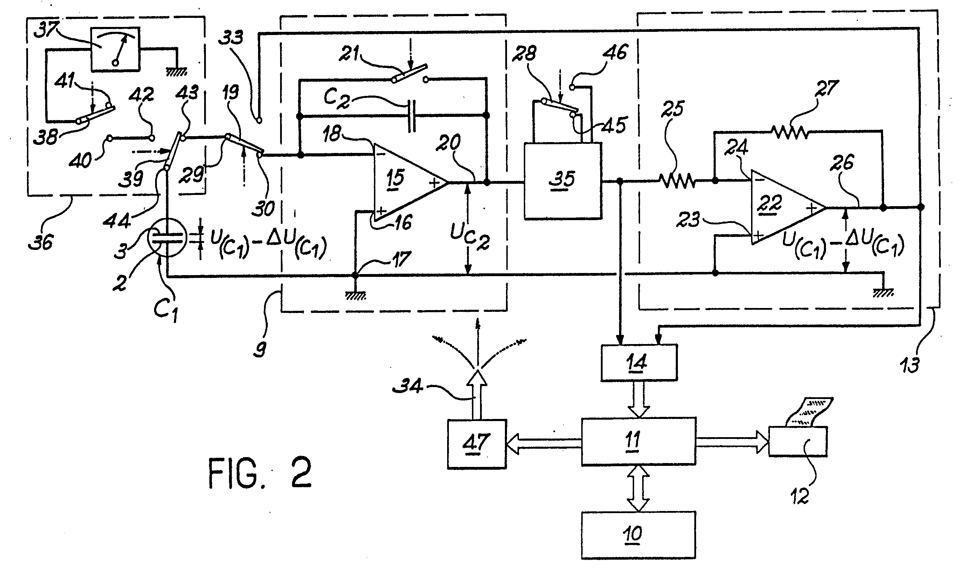

En référence à la fig. 2, on a représenté un dispositif permettant la lecture automatique de la dose d'irradiation d'un dosimètre portatif de type stylocondensateur, à chambre d'ionisation, tel que représenté sur la fig. 1 Ce dispositif comprend des moyens 9 permettant de mesurer lors de chaque lecture, la valeur de la charge de la chambre d'ionisation, grâce à la mesure de la tension de polarisation de cette chambre. Cette chambre est représentée de manière schématique, par le condensateur $C_1$. Des moyens 10 permettent de mémoriser, sous forme numérique, pour chaque lecture la valeur de la tension de polarisation $UC_1$ de la chambre d'ionisation et par conséquent la valeur de la charge de cette chambre; ces moyens 10 sont constitués par une mémoire numérique non volatile, par exemple connectée à des moyens 11 qui permettent de calculer à un instant quelconque la dose D d'irradiation, à partir de l'une des valeurs déjà mémorisées et de la valeur de la tension de polarisation correspondant à la charge de la chambre à cet instant. Cette dose calculée D peut par exemple être imprimée ou visualisée en 12, sur une imprimante, un système d'affichage à tube cathodique ou un voltmètre numérique.

Le dispositif comprend aussi des moyens 13 permettant de recharger la chambre d'ionisation représentée par le condensateur $C_1$, après une lecture, par une tension de polarisation dont la valeur est égale à celle de la tension qui vient d'être mesurée et qui correspond à la charge de la chambre d'ionisation, lors de la lecture. La mémoire numérique 10 est connectée aux moyens de mesure 9 et aux moyens 13 de polarisation de la chambre d'ionisation, par l'intermédiaire du calculateur 11, d'un convertisseur analogique-numérique 14 et d'une mémoire analogique 35.

Les moyens de mesure de la valeur de la tension de polarisation de la chambre d'ionisation $C_1$ sont constitués par un préamplificateur intégrateur comprenant un amplificateur opérationnel 15 à très faible courant d'entrée et dont une entrée 16 est reliée à l'électrode 2 de la chambre d'ionisation, portée à un potentiel de référence 17, par exemple. Une autre entrée 18 de cet amplificateur est reliée à l'électrode 3 de la chambre d'ionisation par l'intermédiaire d'un interrupteur 19, dont on expliquera le fonctionnement par la suite. Cette autre entrée 18 est aussi reliée à la sortie 20 de l'amplificateur opérationnel 15, par l'intermédiaire d'un condensateur $C_2$. Le montage préamplificateur constitué par l'amplificateur opérationnel 15 et les condensateurs $C_1$ et $C_2$ est un montage de type intégrateur. Le condensateur $C_2$ constituant avec le condensateur $C_1$, par l'intermédiaire de l'interrupteur 13, le diviseur de tension destiné à transférer la charge de la chambre d'ionisation de capacité $C_1$, à l'entrée du préamplificateur électromètre 15, sous une tension compatible avec les caractéristiques de fonctionnement de ce préamplificateur, peut être disposé selon d'autres schémas que celui représenté sur la fig. 2. Un interrupteur 21, dont on expliquera le fonctionnement par la suite, est commandé par un circuit logique 47 qui permet sa fermeture. La fermeture de l'interrupteur 21 provoque la décharge du condensateur $C_2$, après une mesure. Le préamplificateur qui vient d'être décrit a un gain 1/A égal à $C_1/C_1 + C_2$; $C_1$ et $C_2$ désignent la valeur des condensateurs correspondant à ces références. En effet, le condensateur $C_2$ constitue avec la capacité $C_1$ de la chambre d'ionisation un diviseur capacitif de tension. Cette caractéristique particulière au dispositif permet d'adapter la tension relativement élevée $UC_1$ de la chambre d'ionisation, aux limitations de la tension d'entrées propres aux préamplificateurs à très faible courant d'entrée, comme l'amplificateur opérationnel 15. Les moyens 13 qui permettent de recharger la chambre d'ionisation à une valeur correspondant à la tension de polarisation de cette chambre, avec une tension dont la valeur est égale à celle de la tension qui vient d'être mesurée, comprennent un montage amplificateur constitué par un amplificateur opérationnel 22. Une entrée 23 de cet amplificateur est reliée au potentiel de référence 17 et une autre entrée 24, est reliée à la sortie 26 de cet amplificateur opérationnel, par l'intermédiaire d'une résistance 27. Cette autre entrée 24 est également reliée à la sortie 20 de l'amplificateur 15, par l'intermédiaire d'une résistance 25 et de la mémoire analogique 35, munie d'un interrupteur de commande 28, dont on expliquera le fonctionnement par la suite. Les résistances 25 et 27, ont pour valeurs respectives $R_1$ et $R_2$. Le montage amplificateur constitué par l'amplificateur opérationnel 22 et les résistances 25 et 27, a un gain égal à $A = R_2/R_1$. Ce gain est choisi de telle sorte qu'il soit l'inverse de celui du montage préamplificateur constitué par l'amplificateur opérationnel 15 et les condensateurs $C_2$ et $C_1$. Il en résulte que si le gain de l'amplificateur 15 obéit à la relation: $C_1/C_1 + C_2 = 1/A$, le gain de l'amplificateur 22 obéit à la relation $A = R_2/R_1 = C_1 + C_2/C_1$.

Le dispositif comprend également des moyens 36 de simulation de dose d'irradiation. Ces moyens sont constitués par une source électrique d'alimentation 37 dont on peut régler la tension de sortie de manière à charger le dosimètre par application de différentes tensions de polarisation. Cela permet d'étalonner le dosimètre par simulation de dose d'irradiation, sous forme de tension de polarisation. Les moyens 36 comprennent également deux interrupteurs 38 et 39. Lorsque l'interrupteur 38 est dans la position 41 et l'interrupteur 39 dans la position 43, le dosimètre est déconnecté de l'alimentation 37. Si par contre l'interrupteur 38 est en position 40 et l'interrupteur 39 en position 42, le dosimètre est chargé grâce à la source électrique 37. Il suffit ensuite de basculer l'interrupteur 39 en position 43 et l'interrupteur 19 en position 30 pour mesurer la dose simulée.

Les moyens 36 peuvent également servir de dispositif de charge automatique, avant emploi, de la chambre d'ionisation d'un dosimètre à électroscope incorporé. De cette manière, la lecture du dosimètre en cours d'utilisation comprend l'asservissement de la charge nécessaire à la remise à zéro du dosimètre, à la sensibilité de l'électroscope, de manière que la lecture de la dose d'irradiation du dosimètre puisse être effectuée de manière indépendante de l'électroscope, par le dispositif de lecture automatique de l'invention.

La description du fonctionnement du dispositif va permettre de mieux comprendre le déroulement du procédé de lecture automatique de la dose d'irradiation du dosimètre portatif, conforme à l'invention.

Lorsqu'une lecture de la dose d'irradiation est à effectuer, le dosimètre est introduit automatiquement dans le dispositif de lecture. L'interrupteur 19 est dans la position 30 et l'interrupteur 39 dans la position 43. Le contact 7 lors de l'introduction du dosimètre dans le dispositif assure la liaison électrique entre l'électrode 3 et la borne 44 de l'interrupteur 39, par suite de la déformation de la plaque 8 (fig. 1). La charge de la chambre d'ionisation est transférée vers l'amplificateur opérationnel 15. Cette chambre d'ionisation était préalablement chargée avant l'irradiation du dosimètre, grâce à l'application d'une tension de polarisation $UC_1$; cette chambre, à la suite de l'irradiation, se décharge partiellement d'une quantité d'électricité correspondant à une chute de tension $\Delta UC_1$. Il en résulte que la différence de potentiel entre les électrodes 2 et 3 de la chambre d'ionisation, représentées par $C_1$, a pour valeur $UC_1 - \Delta UC_1$. La tension mesurée $UC_2$ à la sortie de l'amplificateur opérationnel 15, est proportionnelle à la tension $UC_1 - \Delta(C_1)$ à l'entrée de cet amplificateur et il est possible d'écrire:

$$U(C_2) = U(C_1) - \Delta U(C_1) . C_1/C_1 + C_2.$$

La chute de tension $\Delta UC_1$ aux bornes de la chambre d'ionisation représente la diminution de la charge de cette chambre lorsqu'elle a été soumise à une irradiation correspondant à une dose D. Si l'on désigne par S la sensibilité de la chambre d'ionisation, exprimée en volts/rad, il est possible d'écrire:

$$\Delta UC_1 = S.D.$$

Il en résulte que:

$$UC_2 = UC_1 - S.D.C_1/C_1 + C_2.$$

La valeur analogique de la tension $UC_2$ est mémorisée dans la mémoire analogique 35. Cette mémoire analogique permet de réduire dans une grande mesure la dérive de la charge de $C_2$ due au fait que le préamplificateur intégrateur 9 n'est pas parfait et qu'il ne peut être question dans un appareil automatique à usage industriel de procéder à des retouches de réglages des circuits comme pour un appareil de laboratoire. Il est d'ailleurs possible de programmer le calculateur pour effectuer des réglages automatiques lors des processus de contrôle automatique par les moyens 36 de simulation de dose d'irradiation. Cette mémoire analogique et les moyens éventuels de réglage automatique contribuent donc à l'amélioration de la précision de l'appareil. Elle conserve la valeur analogique de la tension $UC_2$ tant que l'interrupteur 28 est en position 45, tandis que cette valeur analogique est transférée vers les moyens de polarisation 13 et vers le convertisseur analogique-numérique 14, lorsque l'interrupteur 45 est en position 46, par exemple. La valeur analogique de la tension $UC_2$, lorsque le

transfert est opéré, est transformée en valeur numérique grâce au convertisseur 14. Cette valeur numérique est fournie au calculateur 11. Dans la mémoire 10 de ce calculateur a été préalablement enregistrée la valeur numérique de la tension $UC_1$ de polarisation de la chambre d'ionisation, avant que le stylocondensateur ne soit soumis aux radiations. Dans cette mémoire, peut également être enregistrée la sensibilité S de la chambre, ainsi que le code d'identification de cette chambre. Ce code a déjà été décrit plus haut.

A partir de valeurs $UC_2$, $UC_1$, S, $C_1$, $C_2$, le calculateur détermine la valeur D:

$$D = \frac{UC_1 . \dfrac{C_1}{C_2 + C_1} - UC_2}{S . \dfrac{C_1}{C_2 + C_1}}.$$

Chacun des paramètres de la mesure: tension de polarisation initiale de la chambre d'ionisation, transfert de la charge, gain et dérives du préamplificateur pendant la durée de la mesure, peut être obtenu avec une précision et une fiabilité de 1 à quelque 1000. L'erreur due au dispositif de lecture est du même ordre de grandeur. La précision globale de la mesure dépend en fait de la détermination de la sensibilité de la chambre d'ionisation et des fuites électriques de cette chambre. Lorsqu'une mesure de la dose D d'irradiation est effectuée, l'interrupteur 28 est dans la position 46 pour permettre le transfert de la valeur de la tension $UC_2$ vers le calculateur 11, et vers les moyens de polarisation 13, la tension $UC_2$ est donc aussi appliquée à l'entrée 24 de l'amplificateur opérationnel 22, cet amplificateur, dont le gain est égal à $R_2/R_1 = A = C_1 + C_2/C_1$, soit l'inverse du gain $1/A$ du montage amplificateur des moyens de mesure 9, permet d'appliquer aux bornes de la chambre d'ionisation une tension de polarisation égale à $UC_1 - \Delta UC_1$. Lors du transfert de la valeur analogique $UC_2$, l'interrupteur 19 est bien entendu supposé placé dans la position 33. Ainsi, le condensateur $C_1$ de la chambre d'ionisation qui s'était déchargé dans le condensateur $C_2$ à la suite de la mesure est rechargé par une tension qui a une valeur égale à celle de la tension de polarisation de la chambre, avant la mesure. Le stylocondensateur peut alors être déconnecté du dispositif de mesure pour être soumis à d'autres doses d'irradiation. Après chaque mesure, l'interrupteur 21 est fermé, de manière à permettre la décharge du condensateur $C_2$, en vue d'effectuer une nouvelle mesure. L'ouverture ou la fermeture des interrupteurs commandables 19, 21, 28, 38, 39 peut être réalisée de manière automatique grâce au circuit logique 47, constitué de manière connue par des portes et des transitors à effet de champ par exemple, commandés par le calculateur 11. Ces interrupteurs peuvent comporter des parties mobiles, être constitués par des relais électromécaniques par exemple, ou être entièrement statiques, dispositifs à semi-conducteurs par exemple. Les signaux de commande sont délivrés par les sorties 34 de ce circuit logique. Ces sorties n'ont pas été reliées aux interrupteurs 19, 21, 28, 38 et 39 pour des commodités de représentation. La sortie 26 de l'amplificateur opérationnel 22 peut elle-même être reliée au convertisseur analogique numérique 14, de manière que le calculateur 11 puisse enregistrer dans sa mémoire 10 la valeur de la tension de polarisation de la chambre d'ionisation avant la mesure. Ainsi, la chambre d'ionisation, $C_1$, qui peut être rechargée grâce à une tension dont la valeur est égale à celle de la tension de polarisation de cette chambre avant la mesure, peut permettre de totaliser au cours du temps la dose totale d'irradiation à laquelle a été soumis le stylocondensateur. De la même manière, comme toutes les valeurs de tension de polarisation au moment d'une lecture sont conservées dans la mémoire 10, il est possible de connaître la dose d'irradiation à laquelle a été soumis un individu pendant une période donnée.

Les moyens pour polariser la chambre d'ionisation après une lecture pourraient être constitués par un convertisseur de tension asservi par la tension de polarisation de la chambre au moment d'une mesure.

A titre d'exemple, la sensibilité du dispositif de lecture automatique peut être déterminée de la manière suivante: pour une chambre d'ionisation présentant une capacité $C_1$ de 2,7 picofarads:

– si la tension de charge initiale de la chambre est $U_0(C_1) = 130$ volts;
– si le condensateur d'intégration du lecteur a pour valeur:

$$C_2 = 80,4\,pF;$$

Il en résulte que la tension mesurée par le dispositif pour une chambre non irradiée est égale à:

$$U_0(C_2) = U_0(C_1).\ C_1/C_2 = 4,365\text{ volts.}$$

Pour une dose de 0,1 rad, la tension perdue par décharge de la chambre est égale à:

$$\Delta U(C_1) = 96\text{ volts.}$$

Après cette irradiation à 0,1 rad, la tension résiduelle de la chambre d'ionisation est égale à:

$$U(C_1) = 34\text{ volts.}$$

Il en résulte que la sensibilité de la chambre d'ionisation est:

$$S = \Delta U(C_1)/D = 960\text{ volts.rad}^{-1}.$$

De la même manière, on en déduit que la variation de la tension mesurée par le dispositif après cette irradiation est égale à:

$$\Delta U(C_2) = U(C_1).\ C_1/C_2 = 3,224\text{ volts.}$$

La sensibilité du dispositif correspond donc à une valeur $S = \Delta U(C_2)/D = 32,24$ volts.rad$^{-1}$, soit 32 millivolts pour 1 millirad.

Si les stylocondensateurs qui sont lus grâce au dispositif de lecture automatique de l'invention ont des calibres différents, il est possible que le dispositif permettant le déchiffrage du code d'identification du stylo (non représenté sur la fig. 2), délivre un signal permettant la commande d'une commutation automatique du condensateur $C_2$, sur un autre condensateur de valeur appropriée à chaque stylo. La chambre d'ionisation est étanche et son anode de collection des charges (l'électrode axiale) n'est pas reliée électriquement à l'extérieur, de manière permanente. Cette disposition permet de réduire les fuites du stylocondensateur; en effet, ces fuites entraîneraient l'indication d'une dose parasite en l'absence d'irradiation.

Outre leur grand intérêt pour la radioprotection du personnel des centrales et des autres installations ou laboratoires nucléaires, ce procédé et ce dispositif peuvent être appliqués dans différents domaines tels que par exemple:

– toutes les applications des rayonnements ionisants et notamment: les sources scellées ou non, les molécules marquées, la gammagraphie, les irradiations diagnostiques out thérapeutiques, l'archéologie, etc.,
– le contrôle de la stérilisation par irradiation d'instruments médicaux chirurgicaux, de pansements, de médicaments, de denrées alimentaires, de produits périssables, d'emballages stériles, etc.,
– le contrôle du traitement par irradiation contre les microorganismes, parasites, moisissures, etc.,
– le contrôle de la fabrication ou des traitements chimiques sous rayonnements,
– la métrologie des charges et courants électriques (notamment de faible valeur) quelle qu'en soit la provenance,
– les systèmes de mesure et de traitement associés à des capteurs délivrant des courants de charge, et d'une manière générale, la mesure des courants faibles de $10^{-6}$ à $10^{-15}$ Ampères,
– la mesure ou la détection d'aérosols, poussières, fumées, indenties, etc.,
– les mesures électrostatiques, les mesures de champs électriques et de leurs variations, les mesures des électrets pour la détection des rayonnements ionisants, les mesures de pression à partir de capteurs de pression.

Il est bien évident que dans le procédé et le dispositif conformes à l'invention, qui viennent d'être décrits, les moyens utilisés auraient pu être remplacés par des moyens équivalents, sans sortir du cadre de l'invention.

**Revendications**

1. Dispositif de lecture automatique de la dose d'irradiation d'un dosimètre portatif à chambre d'ionisation, comprenant des moyens (9) pour mesurer, lors de chaque lecture, la valeur de la charge de la chambre d'ionisation (4), des moyens (11) pour calculer à un instant quelconque la dose D d'irradiation à partir d'une valeur mémorisée et de la valeur de la charge de la chambre à cet instant et des moyens (13) pour polariser la chambre d'ionisation après une lecture, les moyens pour mesurer la valeur de la charge de la chambre d'ionisation comprenant un préamplificateur intégrateur (15) adapté à la chambre d'ionisation en fonction du diviseur capacitif constitué par la capacité ($C_1$) de la chambre et par un condensateur d'intégration ($C_2$) du préamplificateur intégrateur (15), le transfert de la charge de la chambre d'ionisation au préamplificateur effectuant la mesure de la charge étant assuré par le diviseur capacitif de tension, de manière à adapter la tension de la chambre aux caractéristiques d'entrée du préamplificateur, caractérisé en ce que:
- le dispositif comprend des moyens (10), reliés aux moyens de mesure de la charge de la chambre d'ionisation par l'intermédiaire d'un convertisseur analogique-numérique (14), pour mémoriser à chaque lecture la valeur mesurée de la charge de la chambre d'ionisation;
- les moyens (11) pour calculer la dose D d'irradiation sont agencés de manière à calculer ladite dose à partir d'une de ces valeurs mesurées mémorisées; et
- les moyens (13) pour polariser la chambre d'ionisation après une lecture sont agencés de manière à polariser ladite chambre avec une tension dont la valeur est égale à celle de la tension correspondant à la charge qui vient d'être mesurée.

2. Dispositif selon la revendication 1, caractérisé en ce que les moyens de polarisation (13) comprennent un amplificateur (22) dont le gain est l'inverse du gain du préamplificateur intégrateur (15), cet amplificateur étant connecté en sortie du préamplificateur.

3. Dispositif selon l'une quelconque des revendications 1 et 2, caractérisé en ce qu'il comprend en outre des moyens automatiques de mise en place du dosimètre dans les moyens de mesure.

4. Dispositif selon la revendication 2, caractérisé en ce que l'amplificateur est connecté au préamplificateur par l'intermédiaire d'une mémoire analogique (35) en vue de réduire les dérives de la mesure.

5. Dispositif selon l'une quelconque des revendications 1 à 4, caractérisé en ce qu'il comprend en outre des moyens (36) de simulation de doses d'irradiation.

## Claims

1. Device for automatically reading the irradiation dose of a portable ionization-chamber dosimeter, comprising means (9) for measuring, at the time of each reading, the value of the charge of the ionization chamber (4), means (11) for calculating the irradiation dose D at any instant from a stored value and from the value of the charge of the chamber at this instant and means (13) for polarizing the ionization chamber after a reading, the means for measuring the value of the charge of the ionization chamber comprising an integrating preamplifier (15) adapted to the ionization chamber in dependence upon the capacitive divider formed by the capacity ($C_1$) of the chamber and by an integration capacitor ($C_2$) of the integrating preamplifier (15), the transfer of the charge from the ionization chamber to the preamplifier effecting the measurement of the charge being ensured by the capacitive voltage divider, in such a manner as to adapt the voltage of the chamber to the input characteristics of the preamplifier, characterized in that:
    the device comprises means (10), connected to the means for measuring the charge of the ionization chamber by means of an analogue-digital converter (14), for storing, on each reading, the measured value of the charge of the ionization chamber;
    the means (11) for calculating the irradiation dose D are arranged in such a manner as to calculate the said dose from one of these stored measured values; and
    the means (13) for polarizing the ionization chamber after a reading are arranged in such a manner as to polarize the said chamber with a voltage, the value of which is equal to that of the voltage corresponding to the charge which has just been measured.

2. Device according to Claim 1, characterized in that the polarizing means (13) comprise an amplifier (22), the gain of which is the inverse of the gain of the integrating preamplifier (15), this amplifier being connected at the output of the preamplifier.

3. Device according to either one of Claims 1 and 2, characterized in that it further comprises automatic means for locating the dosimeter in the measuring means.

4. Device according to Claim 2, characterized in that the amplifier is connected to the preamplifier by means of an analogue store (35) with a view to reducing the drifts of the maesurement.

5. Device according to any one of Claims 1 to 4, characterized in that it further comprises means (36) for simulating irradiation doses.

## Patentansprüche

1. Gerät zum automatischen Ablesen der Bestrahlungsdosis von einem Ionisationskammer-Taschendosimeter mit einer Messeinrichtung (9), die bei jedem Ablesen den Wert der Ladung der Ionisationskammer (4) misst, einer Recheneinrichtung (11), die in jedem beliebigen Zeitpunkt die Strahlendosis D ausgehend von dem einen gespeicherten Wert und dem Wert der Ladung der Ionisationskammer in diesem Zeitpunkt berechnet, einer Polarisationseinrichtung (13) zum Polarisieren der Ionisationskammer (4) nach einem Ablesen, wobei die Messeinrichtung (9) zum Messen des Wertes der Ladung der Ionisationskammer (4) einen Vorverstärker-Integrierer (15) aufweist, der an die Ionisationskammer (4)

abhängig von einem kapazitiven Spannungsteiler aus der Kapazität ($C_1$) der Ionisationskammer und aus einem Integrierkondensator ($C_2$) des Vorverstärker-Integrierers (15) angeschlossen ist, wobei die Ladungsübertragung von der Ionisationskammer (4) zum Vorverstärker-Integrierer (15) die Messung der durch den kapazitiven Spannungsteiler gewährleisteten Ladung so bewirkt, dass die Spannung der Ionisationskammer (4) an die Eingangskennlinien des Vorverstärker-Integrierers (15) angepasst ist, dadurch gekennzeichnet, dass

- das Gerät eine Speichereinrichtung (10) aufweist, die über einen Analog/Digital-Umsetzer (14) mit der Messeinrichtung (9) für die Ladung der Ionisationskammer (4) verbunden ist, zum Speichern des Wertes der Ladung der Ionisationskammer (4) bei jedem Ablesen,
- die Recheneinrichtung (11) zur Berechnung der Strahlendosis D so ausgestaltet ist, dass sie die Dosis ausgehend von einem der gespeicherten Messwerte berechnet, und
- die Polarisationseinrichtung zum Polarisieren

der Ionisationskammer nach einer Ablesung derart ausgeführt ist, dass sie die Ionisationskammer mit einer Spannung polarisieren, dessen Wert gleich dem der Spannung ist, die der gerade gemessenen Ladung entspricht.

2. Gerät nach Anspruch 1, dadurch gekennzeichnet, dass die Polarisationseinrichtung (13) einen Verstärker (22) aufweist, dessen Verstärkungsfaktor der Kehrwert des Verstärkungsfaktors des Vorverstärker-Integrierers (15) ist und der mit dem Ausgang des Vorverstärker-Integrierers verbunden ist.

3. Gerät nach Anspruch 1 oder 2, gekennzeichnet durch eine Einrichtung, die automatisch das Dosimeter in der Messeinrichtung aufstellt.

4. Gerät nach Anspruch 2, dadurch gekennzeichnet, dass der Verstärker mit dem Vorverstärker-Integrierer über einen Analogspeicher (35) verbunden ist, um die Abweichung der Messung zu verringern.

5. Gerät nach einem der Ansprüche 1 bis 4, gekennzeichnet, durch eine Simulationseinrichtung (36) für die Bestrahlungsdosen.

FIG. 1

FIG. 2